# EUROPÄISCHE PATENTANMELDUNG

(11) **EP 4 768 767 A1**
(43) Veröffentlichungstag der Anmeldung: **01.07.2026**
(21) Anmeldenummer: 25223121.2
(22) Anmeldetag: 12.12.2025
(51) Int. Cl.: F16K 31/50, F16K 37/00

(54) **VENTILANTRIEB, VENTIL UND VERFAHREN ZUR VERSCHLEISSÜBERWACHUNG**

(30) Priorität: 20.12.2024 DE 102024139271
(71) Anmelder: GEMÜ Gebr. Müller Apparatebau GmbH & Co. Kommanditgesellschaft, 74653 Ingelfingen (DE)
(72) Erfinder: Magej, Johann, 74523 Schwäbisch Hall (DE); Göker, Philipp, 74653 Ingelfingen (DE)
(74) Vertreter: DREISS Patentanwälte PartG mbB

(57) **Zusammenfassung**

Die Erfindung betrifft einen Ventilantrieb, ein Ventil und ein Verfahren zur Verschleißüberwachung eines solchen Ventilantriebs.

## Beschreibung

Die Erfindung betrifft einen Ventilantrieb für ein Ventil, ein solches Ventil und ein Verfahren zur Verschleißüberwachung eines Ventilantriebs.

Aus der DE 10 2019 100 941 B4 ist ein Verfahren zum Überwachen eines Getriebespiels in Abhängigkeit einer Motorposition und eines Motordrehmoments bekannt.

Der Erfindung liegt die Aufgabe zugrunde, eine Verschleißüberwachung für einen Ventilantrieb bereitzustellen, welches gezielt auf die Dynamik in einem Ventil eingerichtet ist.

Die der Erfindung zugrundeliegende Aufgabe wird gelöst durch einen Ventilantrieb mit den Merkmalen des Anspruchs 1. Die Erfindung ist gerichtet auf einen Ventilantrieb für ein Ventil, umfassend: eine Getriebeeinrichtung mit einem Antriebselement und mit einem Abtriebselement, wobei das Antriebselement ein Antriebsgewinde und das Abtriebselement ein Abtriebsgewinde aufweist. Ferner weist der Ventilantrieb eine Überwachungseinrichtung zur Überwachung eines Verschleißes der Getriebeeinrichtung auf. Die Überwachungseinrichtung ist derart eingerichtet, dass der Verschleiß der Getriebeeinrichtung in Abhängigkeit eines den Drehwinkel der Getriebeeinrichtung charakterisierenden ersten Sensorsignals und eines die Linearposition der Getriebeeinrichtung charakterisierenden zweiten Sensorsignals ermittelt wird. Demnach wird der für ein Ventil relevante Verschleiß zwischen einer Komponente zur Drehbewegung und einer Komponente zur Hubbewegung gezielt ermittelt.

Ein vorteilhafter Aspekt der Erfindung sieht vor, dass die Überwachungseinrichtung derart eingerichtet ist, dass ein Verschleiß des An- und/oder Abtriebselements der Getriebeeinrichtung in Abhängigkeit des den Drehwinkel des An- und/oder Abtriebselements charakterisierenden ersten Sensorsignals und des die Linearposition des An- und/oder Abtriebselements charakterisierenden zweiten Sensorsignals ermittelt wird. Demnach ist der Verschleiß spezifisch auf das An- und/oder Abtriebselement gerichtet. Diese sind besonders gut geeignet, um den für das Ventil relevanten Verschleiß zu erfassen.

Ein vorteilhafter Aspekt der Erfindung sieht vor, dass der Ventilantrieb einen Drehwinkelsensor zum Erzeugen des den Drehwinkel des An- und/oder Abtriebselements charakterisierenden ersten Sensorsignals und einen Linearsensor und/oder ein Kraftsensor zum Erzeugen des die Linearposition des An- und/oder Abtriebselements charakterisierenden zweiten Sensorsignals umfasst. Demnach kann mit einfachen Mitteln eine Verschleißüberwachung erzielt werden. Neben dem Linearsensor ist es auch denkbar, dass der Verschleiß in Abhängigkeit der Signale des Drehwinkelsensors und des Kraftsensors ermittelt wird.

Es ist alternativ oder zusätzlich denkbar, dass das erste Sensorsignal und/oder das zweite Sensorsignal mittels einer Stromüberwachung und/oder Schallüberwachung und/oder Vibrationsüberwachung erfolgt. Bei Überwinden des Antriebsspiels kommen die Gewindeflanken in Eingriff, wobei der Stromverbrauch und/oder der Schall und/oder die Vibration zumindest kurzzeitig steigt, oder sich im Falle des Schalls oder Vibrationen sich der Ton oder Frequenzbereich ändert. Demnach kann dieser Zeitpunkt mittels einer Stromüberwachung und/oder einer Schallüberwachung und/oder einer Vibrationsüberwachung erfasst werden.

Ein vorteilhafter Aspekt der Erfindung sieht vor, dass die Überwachungseinrichtung derart eingerichtet ist, dass ein Antriebsspiel der Getriebeeinrichtung, insbesondere zwischen dem An- und Abtriebselement, in Abhängigkeit einer Zeitreihe des Drehwinkels des An- und/oder Abtriebselements und einer Zeitreihe der Linearposition des An- und/oder Abtriebselements und/oder einer Zeitreihe der auf das An- und/oder Abtriebselement wirkenden Kraft ermittelt wird. Demnach kann mittels des zeitlichen Verlaufs das Antriebsspiel ermittelt werden. Beispielsweise kann bei der Umkehrung der Bewegung des An- und/oder Abtriebselements die Verzögerung zwischen der Umkehrbewegung eines von dem An- und/oder Abtriebselement Rückschlüsse auf das Antriebsspiel zulassen. Zu Beginn weist das Antriebsspiel einen Ursprungswert auf, wobei der Verschleiß 0 ist. Das Antriebsspiel steigt mit der Zeit, wobei entsprechend auch der Verschleiß steigt. Die Korrelation kann linear, exponentiell oder einem sonstigen mathematischen Zusammenhang entsprechen. In einem einfachen Beispiel entspricht der Verschleiß einer Differenz des Antriebsspiels im Messzustand und im Ursprungszustand in mm.

Ein vorteilhafter Aspekt der Erfindung sieht vor, dass der Verschleiß des An- und/oder Abtriebsgewindes in Abhängigkeit eines Vergleichs zwischen dem ermittelten Antriebsspiel und einem Grenzantriebsspiel ermittelt wird. Sollte das Antriebsspiel das Grenzantriebsspiel überschreiten, kann der Verschleißzustand als "defekt" vorliegen. Sollte das Antriebsspiel unter dem Grenzantriebsspiel liegen, kann der Verschleißzustand als "funktionsfähig" vorliegen. Es sind noch weitere Abstufungen möglich, wie z.B. "Wartung notwendig" oder "Austausch erforderlich". Bei dem Verschleiß kann es sich um eine stetige Verschleißzahl, wie das zusätzliche Antriebsspiel in mm, oder diskrete Verschleißzustände, wie zuvor aufgelistet, handeln.

Ein vorteilhafter Aspekt sieht vor, dass die Überwachungseinrichtung derart eingerichtet ist, dass der Verschleiß der Getriebeeinrichtung, insbesondere des An- und/oder Abtriebsgewindes, in Abhängigkeit eines Drehwinkels des Antriebselements ermittelt wird, welcher das Antriebselement zwischen einem ersten Zeitpunkt und einem zweiten Zeitpunkt zurücklegt, wobei im ersten Zeitpunkt das Abtriebselement an einem mechanischen Anschlag zur Anlage kommt und im zweiten Zeitpunkt das Abtriebselement eine Linearbewegung beginnt.

Das Abtriebselement wird vorzugsweise mittels des Antriebselements an einen mechanischen Anschlag gefahren, indem das Antriebselement solange rotiert wird, bis das Abtriebselement an dem mechanischen Anschlag zur Anlage kommt. Der mechanische Anschlag ist vorzugsweise auf der dem Absperrmittel bzw. der Ventilmembran abgewandten Seite des Ventilantriebs angeordnet. In diesem Zustand ist der Ventilantrieb in der voll geöffneten Position. Dabei liegen die Oberseiten der Gewindeflanken des Abtriebselements an den Unterseiten der Gewindeflanken des Antriebselements an. Zusätzlich ist vorzugsweise das Abtriebselement durch den Mediumsdruck in der Durchgangsleitung zusätzlich gegen den mechanischen Anschlag beaufschlagt. Zur Überwachung des Verschleißes wird anschließend vorzugsweise das Antriebselement angetrieben, um das Abtriebselement hin zum Absperrmittel zu bewegen. Aufgrund des vorhandenen Antriebsspiels und des wirkenden Mediumsdrucks wird das Abtriebselement weiterhin gegen den mechanischen Anschlag beaufschlagt. Dies erfolgt solange, bis die Unterseite der Gewindeflanken des Antriebselements zur Anlage an die Oberseite der Gewindeflanken des Abtriebselements gelangen. Erst in diesem Zustand wird die rotatorische Bewegung des Antriebselements tatsächlich in eine translatorische Bewegung des Abtriebselements gewandelt. Mittels eines Linearpositionssensors wird vorzugsweise der Zeitpunkt erfasst, wann das Abtriebselement zur Anlage an den mechanischen Anschlag gelangt und wann das Abtriebselement anschließend in Richtung der Ventilmembran linear in Bewegung gesetzt wird. Mittels des Drehwinkelsensors wird vorzugsweise der Drehwinkel erfasst, welcher zwischen dem Beginn der Rotation des Antriebselements und dem Beginn der Linearbewegung des Abtriebselements erfasst wird. Die Überwachungseinrichtung ist vorzugsweise derart eingerichtet, dass diese in Abhängigkeit des erfassten Drehwinkels zwischen den beiden Zeitpunkten einen Verschleiß der Getriebeeinrichtung erfasst.

Ein vorteilhafter Aspekt der Erfindung sieht vor, dass die Überwachungseinrichtung eine, insbesondere akustische, optische und/oder haptische, Alarmvorrichtung zum Ausgeben eines Alarms bei Überschreiten eines Grenzverschleißes durch den ermittelten Verschleiß aufweist. Demnach kann dem Bediener einfach und schnell signalisiert werden, dass ein vorbestimmter Verschleißzustand erreicht wurde.

Ein vorteilhafter Aspekt der Erfindung sieht vor, dass die Überwachungseinrichtung derart eingerichtet ist, dass ein den Verschleiß charakterisierendes Signal an eine übergeordnete Steuerung bereitgestellt wird, insbesondere wenn der Verschleiß einen Grenzverschleiß übersteigt. Demnach kann der Verschleiß einfach in übergeordnete Prozessabläufe eingebunden werden und der Prozess auf den Verschleiß angepasst werden. Es ist denkbar, dass der Prozess in Abhängigkeit des ermittelten und bereitgestellten Verschleißes angepasst werden. Beispielsweise kann die Betriebsgeschwindigkeit oder Hubanzahl mit steigendem Verschleiß reduziert werden, um einen vollständigen Defekt zu vorzubeugen. Zusätzlich kann mit dem bekannten Verschleißzustand eine Hochrechnung erfolgen und damit die verbleibende Schaltwechselanzahl bis zum Erreichen des Grenzverschleißes rechtzeitig vorher ermittelt werden. Mit dieser Information gibt der Ventilantrieb den Zeitpunkt für die Wartung oder den Austausch vor und erhöht damit die Anlagenverfügbarkeit.

Ein vorteilhafter Aspekt der Erfindung sieht vor, dass die Überwachungseinrichtung derart eingerichtet ist, dass eine Verschleißzunahme in Abhängigkeit einer Zeitreihe des Verschleißes bestimmt wird. Demnach kann erfasst werden, ob sich die Getriebeeinrichtung außergewöhnlich schnell verschleißt. Dies kann auf strukturelles Problem, wie einen Montagefehler, einen Bedienfehler oder Qualitätsproblem der Bauteile oder übermäßige Belastung hindeuten. Die Verschleißzunahme kann vor einem tatsächlichen Defekt eine Korrektur des Problems ermöglichen. Es ist vorteilhaft, wenn ein Alarm und/oder ein Signal ausgelöst wird, wenn die Verschleißzunahme eine Grenzverschleißzunahme übersteigt. Demnach kann schnell in den Prozess eingegriffen werden.

Ein vorteilhafter Aspekt der Erfindung sieht vor, dass die Überwachungseinrichtung einen Speicher zum Speichern der Zeitreihen und/oder des Grenzverschleißes aufweist. Demnach können prozess- und überwachungsnah die Grenzwerte für den Verschleiß, die Verschleißzunahme und/oder das Antriebsspiel bereitgestellt werden. Ein weiterer Vorteil ist, dass durch die Verschleißüberwachung und damit eine frühzeitige Ausfallerkennung die Sicherheitsreserven bei der Auslegung reduziert werden können. Damit können kleinere Gewindetriebe eingesetzt werden, was den Bauraum und Kosten senkt sowie den Wirkungsgrad und damit Effizienz des Antriebs deutlich erhöht.

Ein vorteilhafter Aspekt der Erfindung sieht vor, dass das Antriebselement als rotierbare Spindel und/oder das Abtriebselement als linear verschiebliche Spindelmutter ausgebildet ist. Ein weiterer vorteilhafter Aspekt der Erfindung sieht vor, dass die Spindel mit einem Antrieb, insbesondere einem elektrischen Motor, und/oder die Spindelmutter mit einem linear beweglichen Absperrmittel, insbesondere einer Ventilmembran, verbunden ist. Mittels der Ventilmembran kann eine Durchgangsöffnung geöffnet und geschlossen werden. Die Ventilmembran ist vorzugsweise bewegungsfest mit dem Abtriebselement ausgebildet, sodass eine lineare Bewegung des Abtriebselements zu einer linearen Bewegung der Ventilmembran führt. Die Linearposition des Abtriebselements ist aufgrund der axialen bewegungsfesten Verbindung zwischen dem Abtriebselement und der Ventilmembran mit dem Hub der Ventilmembran gleichzusetzen.

Alternativ ist es denkbar, dass das Antriebselement als linear verlagerbare Spindel und/oder das Abtriebselement als rotierbare Spindelmutter ausgebildet sind. Vorzugsweise ist dann die Spindelmutter mit dem Antrieb, insbesondere dem elektrischen Motor, und die Spindel mit dem Absperrmittel, insbesondere der Ventilmembran, verbunden.

Die Sensoren werden vorzugsweise kabelgebunden mittels einer Geräteversorgung des Ventilantriebs mit Energie versorgt. Alternativ oder zusätzlich ist es denkbar, dass ein, insbesondere autarker, Akku zum Betreiben der Sensoren, insbesondere zum Erzeugen der Sensorsignale und/oder zum Übertragen der Sensorsignale, vorgesehen ist. Es ist ferner vorzugsweise eine Übertragungseinrichtung zum kabelgebundenen oder kabellosen Übertragen der Sensorsignale vorgesehen. Alternativ ist denkbar, dass die Sensorsignale nicht übertragen werden, sondern geräteintern zu Informationen verarbeitet, wobei insbesondere diese dann an die Steuerung oder an einen Betreiber übertragbar sind oder übertragen werden.

Die der Erfindung zugrundeliegende Aufgabe wird ebenfalls gelöst durch ein Ventil mit den Merkmalen des Anspruchs 8. Die Erfindung ist gerichtet auf ein Ventil mit einem Ventilantrieb nach einem der vorherigen Ansprüche.

Die der Erfindung zugrundeliegende Aufgabe wird ebenfalls gelöst durch ein Verfahren mit den Merkmalen des Anspruchs 10. Die Erfindung ist gerichtet auf ein Verfahren zur Verschleißüberwachung eines Ventilantriebs, die Schritte umfassend: Erfassen eines den Drehwinkel der Getriebeeinrichtung charakterisierenden ersten Sensorsignals und eines die Linearposition der Getriebeeinrichtung charakterisierenden zweiten Sensorsignals, Ermitteln eines Verschleißes einer Getriebeeinrichtung des Ventilantriebs in Abhängigkeit des ersten Sensorsignals und des zweiten Sensorsignals.

Das Ermitteln des Verschleißes umfasst vorzugsweise einen, mehrere oder alle der nachfolgenden Schritte:
- Ermitteln des Initialspiels im Neuzustand und dauerhaftes Speichern des ermittelten Initialwertes als Referenz
- Übergang in den Normalbetrieb
- Regelmäßige "Scanvorgänge" während des Normalbetriebs in der geeigneten Endlage oder durch einen Extra-Schaltwechsel beispielsweise alle X Schaltwechsel oder alle X Betriebsstunden oder auf Aufforderung
- Ermitteln des Spiels, Ermitteln des Verschleißes durch den Vergleich mit der Referenz
- Hochrechnung verbleibender Betriebsstunden oder Schaltwechsel anhand des ermittelten Verschleißes und des hinterlegten Grenzverschleißes;
- Einordnen des ermittelten Verschleißes in eine Kategorie, wie z.B. "Zustand in Ordnung" oder "Wartung empfohlen in X-Tagen" oder "Alarm: kritischer Verschleißzustand. Sofortiger Tausch empfohlen";
- Bereitstellen der die Hochrechnung charakterisierenden Informationen für einen Betreiber.

Ein vorteilhafter Aspekt der Erfindung sieht vor, dass das erste Sensorsignal einen Drehwinkel eines An- und/oder Abtriebselements der Getriebeeinrichtung und das zweite Sensorsignal eine Linearposition eines An- und/oder Abtriebselements der Getriebeeinrichtung und/oder eine auf das An- und/oder Abtriebselement wirkende Kraft umfasst.

Ein vorteilhafter Aspekt der Erfindung sieht vor, dass das Verfahren ferner die Schritte umfasst: Erfassen einer Zeitreihe des ersten Sensorsignals und des zweiten Sensorsignals; Ermitteln eines Antriebsspiels zwischen dem An- und Abtriebselement in Abhängigkeit der Zeitreihe des ersten Sensorsignals und der Zeitreihe des zweiten Sensorsignals; Vergleichen des ermittelten Antriebsspiels und einem Grenzantriebsspiel; Ermitteln des Verschleißes des An- und/oder Abtriebselements in Abhängigkeit des Vergleichs zwischen dem Antriebsspiel und dem Grenzantriebsspiel.

Ein vorteilhafter Aspekt der Erfindung sieht vor, dass das Verfahren ferner die Schritte umfasst: Ausgeben eines Alarms und/oder Bereitstellen eines den Verschleiß charakterisierenden dritten Sensorsignals, wenn der ermittelte Verschleiß einen Grenzverschleiß übersteigt. Das dritte Sensorsignal beinhaltet vorzugsweise eine Information über den Verschleiß.

Vorzugsweise wird das erste Sensorsignal, das zweite Sensorsignal und/oder das dritte Sensorsignal gleichzeitig erfasst.

Ein vorteilhafter Aspekt der Erfindung sieht vor, dass der Antrieb und/oder das Antriebselement in Abhängigkeit des ermittelten Verschleißzustandes und/oder des ersten Sensorsignals und/oder des zweiten Sensorsignals angesteuert wird. Sollte ein erhöhter Verschleiß und/oder ein erhöhtes Antriebsspiel ermittelt worden sein, kann der Antrieb über einen zuvor festgelegten Endanschlag hinausbewegt werden. Somit kann der erhöhte Verschleiß und/oder das erhöhte Antriebsspiel kompensiert werden. Trotz Verschleiß in der Getriebevorrichtung kann so weiterhin ein sicheres Verschließen der Durchgangsleitung mit der Ventilmembran gewährleistet werden.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1: eine schematische Ansicht eines Ventils 10; und
- Fig. 2 - 3: eine schematische Ansicht des An- und Abtriebselements bei der Überwachung des Antriebsspiels.

Das Ventil 10 weist einen Ventilantrieb 12 mit einer Getriebeeinrichtung 14 und ein Stellelement in Form einer Ventilmembran 16 auf. Der Ventilantrieb 12 ist in einem Antriebsgehäuse 18 angeordnet. Die Ventilmembran 16 ist in einem Ventilgehäuse 20 angeordnet.

Mittels des Ventilantriebs 12 ist die Ventilmembran 16 entlang einer Stellachse 22 zwischen einer oberen Offenstellung zum fluidischen Öffnen und einer unteren Schließstellung zum fluidischen Schließen einer nicht dargestellten Durchgangsleitung linear verlagerbar.

Der Ventilantrieb 12 weist als Antrieb einen elektrischen Motor 24 auf, welcher ein Antriebselement 26 rotatorisch antreibt. Das Antriebselement 26 ist als Spindel ausgebildet. Zur Leistungsübertragung wirkt ein Abtriebselement 28 mit dem Antriebselement 26 zusammen. Das Abtriebselement 28 ist als Spindelmutter ausgebildet. Demnach wird die rotatorische Bewegung des Antriebselements 26 um die Stellachse 22 in eine lineare Bewegung, auch als Hub bezeichnet, entlang der Stellachse 22 gewandelt. Dazu weisen das Antriebselement 26 ein Antriebsgewinde 30 und das Abtriebselement 28 ein Abtriebsgewinde 32 auf, welche im Betrieb miteinander zusammenwirken, insbesondere kämmen. Das Abtriebselement 28 ist bewegungsfest mit der Ventilmembran 16 verbunden und zusätzlich gegen Verdrehen gesichert, sodass eine lineare Bewegung des Abtriebselements 28 mit dem Hub der Ventilmembran 16 einhergeht.

Zum Schließen der Durchgangsleitung ist es von besonderer Bedeutung, dass die Ventilmembran 16 tatsächlich den erforderlichen Hub vollzieht. Nur dann kann sichergestellt werden, dass die Ventilmembran 16 an einem Dichtsitz zur Anlage kommt. Diese Voraussetzung steht in einem direkten Zusammenhang mit dem Verschleiß der Getriebeeinrichtung 14, insbesondere dem Antriebsspiel zwischen dem Antriebselement 26 und dem Abtriebselement 28. Wenn das Antriebsspiel zu groß ist, kann es sein, dass mit dem Antrieb des Antriebselements 26 das Abtriebselement 28 nicht ausreichend linear bewegt wird. Dies kann mit dem erfindungsgemäßen Verfahren erkannt und diesem auch entgegenwirkt werden.

Auch ohne Verschleiß existiert in der Getriebeeinrichtung 14 ein Antriebsspiel, welches bei der Ansteuerung des Antriebselements 26 berücksichtigt wird. Mit der Zeit kommt es zum Verschleiß des Antriebselements 26, insbesondere des Antriebsgewindes 30, und/oder des Abtriebselements 28, insbesondere des Abtriebsgewindes 32. Dies führt dazu, dass das Antriebsspiel in der Getriebeeinrichtung 14 größer wird.

Der Ventilantrieb 12 weist daher eine Überwachungseinrichtung 34 zum Überwachen des Verschleißes der Getriebeeinrichtung 14 und eine Sensoreinrichtung 36 auf. Die Sensoreinrichtung 36 weist einen Drehwinkelsensor 38 zum Erfassen einer den Drehwinkel des Antriebselements 26 und/oder des Abtriebselements 28 charakterisierenden ersten Sensorsignals 40 und einen Linearpositionssensor 42 zum Erfassen einer die Linearposition des Antriebselements 26 und/oder des Abtriebselements 28 charakterisierenden zweiten Sensorsignals 44. Die Sensoreinrichtung 36, insbesondere der Drehwinkelsensor 38 und/oder der Linearpositionssensor 42, weisen ferner eine Übertragungseinrichtung 46 zum kabellosen Übertragen der Sensorsignale, insbesondere mittels Funk, auf. Alternativ zum Linearpositionssensor 42 kann auch ein Kraftsensor oder ein Drehmomentsensor vorgesehen sein. Es ist alternativ denkbar, dass die Sensorsignale intern zu Informationen verarbeitet werden und diese Informationen kabelgebunden oder kabellos mittels der Übertragungseinrichtung 46 übertragen werden.

Die Überwachungseinrichtung 34 empfängt die Sensorsignale 40, 44, vorzugsweise kabellos und ist derart eingerichtet, dass der Verschleiß der Getriebeeinrichtung 14 in Abhängigkeit des ersten Sensorsignals 40 und des zweiten Sensorsignals 44 ermittelt wird. Der Verschleiß der Getriebeeinrichtung 14 umfasst vorzugsweise den Verschleiß des Antriebselements 26, insbesondere des Antriebsgewindes 30, und/oder des Abtriebselements 28, insbesondere des Abtriebsgewindes 32.

Die Überwachungseinrichtung 34 weist eine nicht dargestellte Speichereinrichtung zum Speichern des ersten Sensorsignals 40 und des zweiten Sensorsignals 44 auf. Demnach speichert die Überwachungseinrichtung 34 Zeitreihen des ersten Sensorsignals 40, insbesondere des Drehwinkels des Antriebselements 26 und/oder des Abtriebselements 28, und/oder des zweiten Sensorsignals 44, insbesondere der Linearposition des Antriebselements 26 und/oder des Abtriebselements 28.

Die Überwachungseinrichtung 34 ist ferner derart eingerichtet, dass ein Antriebsspiel der Getriebeeinrichtung 14, insbesondere zwischen dem Antriebselement 26 und dem Abtriebselement 28, in Abhängigkeit der Zeitreihe des ersten Sensorsignals 40, insbesondere des Drehwinkels des Antriebselements 26 und/oder des Abtriebselements 28, und einer Zeitreihe des zweiten Sensorsignals 44, insbesondere der Linearposition des An- und/oder des Abtriebselements 28, ermittelt wird. Wenn das Antriebselement 26 als Spindel ausgebildet ist, wird der Drehwinkel des Antriebselements 26 erfasst. Wenn das Abtriebselement 28 als Spindelmutter ausgebildet ist, wird die Linearposition des Abtriebselements 28 erfasst. Das Antriebsspiel ist vorzugsweise bei einer Bewegungsumkehr zu ermitteln. In dem Fall kann mittels der Überwachungseinrichtung 34 die Verzögerung erfasst werden, die auftritt, um mittels des Antriebselements 26 das Abtriebselements 28 ebenfalls in der Bewegung umzukehren. Aus der Verzögerung in Verbindung z.B. mit der Winkelgeschwindigkeit kann auf das Antriebsspiel geschlossen werden.

Die Überwachungseinrichtung 34 vergleicht das ermittelte Antriebsspiel und ein in der Speichereinrichtung hinterlegtes Grenzantriebsspiel und ermittelt aus dem Vergleich den Verschleiß der Getriebeeinrichtung 14, insbesondere des Antriebsgewindes 30 und/oder des Abtriebsgewindes 32. Bei Überschreiten eines in der Speichereinrichtung hinterlegten Verschleißgrenzwertes kann die Überwachungseinrichtung 34 mittels einer Alarmvorrichtung einen, insbesondere einen akustischen, optischen oder haptischen, Alarm erzeugen, sodass der Bediener auf z.B. auf einen Defekt hingewiesen werden.

Der Verschleiß kann kontinuierliche Werte, welche dem zusätzlich ermittelten Antriebsspiel in mm entspricht, oder diskrete Werte, welche z.B. in die Kategorien "funktionsfähig", "defekt", "Wartung erforderlich", "Austausch erforderlich" eingeteilt werden können, annehmen. Für jede Kategorie kann ein eigenes Grenzantriebsspiel hinterlegt sein. Bei dem Grenzantriebsspiel kann es sich um ein frei festlegbares Antriebsspiel oder um ein beim Einrichten der Ventilantriebs 10 vorliegendes Antriebsspiel, insbesondere Ursprungsspiel, handeln.

Neben einem Alarm kann der Verschleiß bzw. Verschleißzustand einer nicht dargestellten Steuerung, insbesondere kabellos, zur Verfügung gestellt werden. Die Steuerung kann den Ventilantrieb 12 anschließend in Abhängigkeit des ermittelten Verschleißzustandes angesteuert werden. So kann stets ein sicherer Betrieb des Ventils 10 gewährleistet werden.

Der Verschleißzustand kann in regelmäßigen Zeitabständen oder bei Überschreiten bestimmter Grenzwerte oder auf aktive Anfrage zum Zwecke der vorausschauenden Wartungsplanung bestimmt werden.

Die Überwachungseinrichtung 34 kann ferner derart eingerichtet sein, dass eine Verschleißzunahme des Verschleißes der Getriebeeinrichtung 14 in Abhängigkeit einer Zeitreihe des Verschleißes bestimmt wird. Sollte die Verschleißzunahme eine Grenzverschleißzunahme, welche in der Speichereinrichtung hinterlegt sein kann, überschreiten, kann ferner ein Alarm und/oder ein Signal ausgelöst werden.

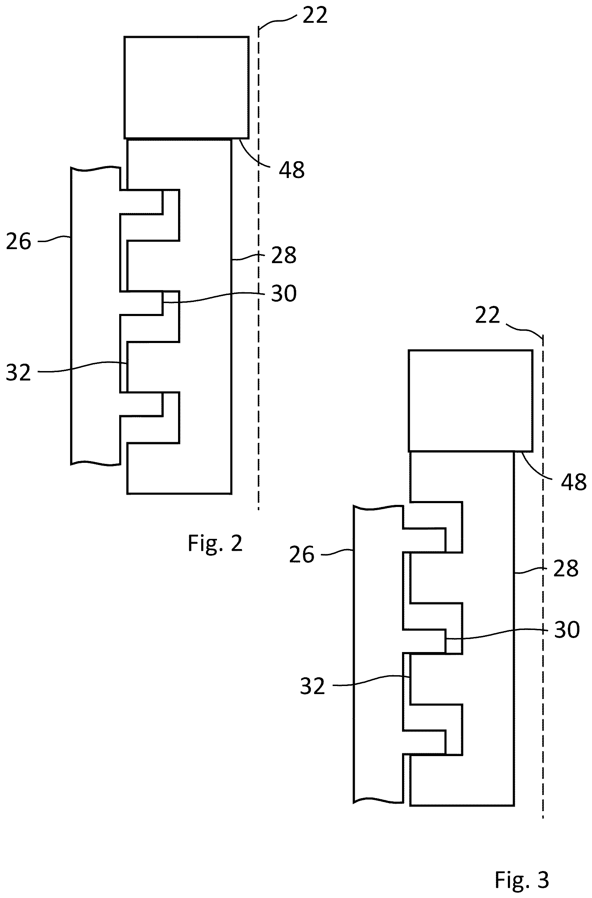

Gemäß Fig. 2 und 3 sind beispielhaft zwei Zustände der Getriebeeinrichtung 14 gezeigt, in denen das Antriebsspiel des Antriebselements 26 und des Abtriebselements 28 erfassbar sind. Das Abtriebselement 28 wird gemäß Fig. 2 mittels des Antriebselements 26 an einen mechanischen Anschlag 48 gefahren, indem das Antriebselement 26 in Form der Spindel solange rotiert wird, bis das Abtriebselement 28 in Form der Spindelmutter an dem mechanischen Anschlag 48 zur Anlage kommt. Der mechanische Anschlag 48 ist vorzugsweise auf der dem Absperrmittel bzw. der Ventilmembran 16 abgewandten Seite des Ventilantriebs 12 angeordnet. In diesem Zustand ist der Ventilantrieb 12 in der voll geöffneten Position. Dabei liegen die Unterseiten der Gewindeflanken des Abtriebselements 28 an den Oberseiten der Gewindeflanken des Antriebselements 26 an. Zusätzlich ist das Abtriebselement 28 durch den Mediumsdruck in der Durchgangsleitung zusätzlich gegen den mechanischen Anschlag 48 beaufschlagt.

Zum Schonen der Ventilantriebs 12 ist es denkbar, dass nur dann der mechanische Anschlag 48 angefahren wird, wenn auch der Antriebsverschleiß bestimmt werden soll. Demnach ist die Steuerung derart zum Ansteuern des Ventilantriebs 12 ausgebildet, dass diese das Abtriebselement 28 zum Erfassen des Verschleißzustandes gegen den mechanischen Anschlag fährt und im Normalbetrieb, also ohne Erfassen des Verschleißzustandes, in den Offen-Position vor dem mechanischen Anschlag zum Stehen kommt.

Anschließend wird das Antriebselement 26 angetrieben, um das Abtriebselement 28 hin zum Absperrmittel zu bewegen. Aufgrund des wirkenden Mediumsdruck wird das Abtriebselement 28 weiterhin gegen den mechanischen Anschlag 48 beaufschlagt. Dies erfolgt solange, bis die Unterseite der Gewindeflanken des Antriebselements 26 zur Anlage an die Oberseite der Gewindeflanken des Abtriebselements 28 gelangen. Dieser Zustand ist in Fig. 3 gezeigt. Erst in diesem Zustand wird die rotatorische Bewegung des Antriebselements 26 in eine translatorische Bewegung des Abtriebselements 28 gewandelt.

Mittels des Linearpositionssensors 42 wird der Zeitpunkt erfasst, wann das Abtriebselement 28 zur Anlage an den mechanischen Anschlag 48 gelangt und wann das Abtriebselement 28 anschließend in Richtung der Ventilmembran in Bewegung gesetzt wird. Mittels des Drehwinkelsensors 38 wird der Drehwinkel erfasst, welcher zwischen dem Beginn der Rotation des Antriebselements 26 gemäß Fig. 2 und dem Beginn der Linearbewegung des Abtriebselements 28 gemäß Fig. 3 erfasst. Die Stellachse 22 ist in Fig. 2 und 3 der Anschaulichkeit halber dargestellt, wobei die relative Position der Stellachse 22 zu den Gewindeflanken weiter beabstandet ist. Die Überwachungseinrichtung 34 ist derart eingerichtet, dass diese in Abhängigkeit des erfassten Drehwinkels zwischen den beiden Zeitpunkten einen Verschleiß der Getriebeeinrichtung 14 erfasst.

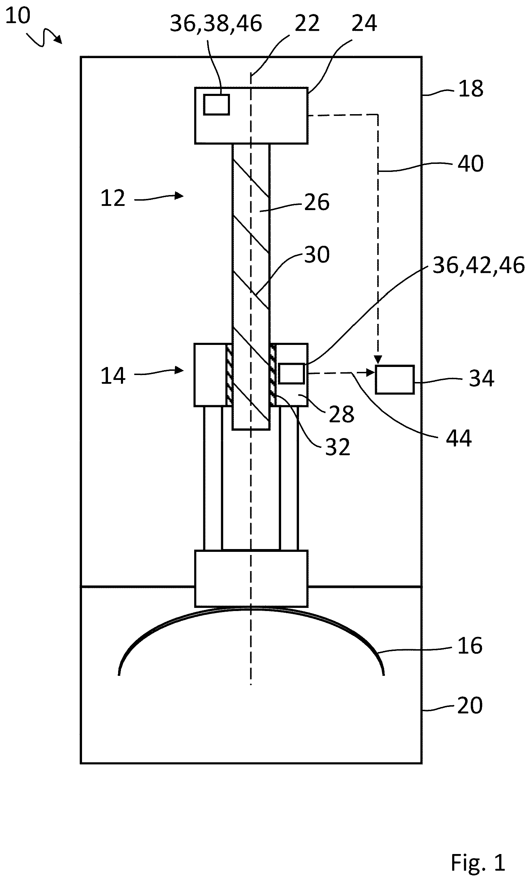

In den Fig. 1 ist das Antriebselement 26 als Spindel und das Abtriebselement 28 als Spindelmutter ausgebildet. Es ist alternativ auch möglich, dass das Antriebselement 26 als Spindelmutter und das Abtriebselement 28 als Spindel ausgebildet ist. In dem Fall wird im erfindungsgemäßen Verfahren die Spindel gegen den mechanischen Anschlag verfahren und anschließend das erfindungsgemäße Verfahren zum Ermitteln des Verschleißes durchgeführt.

### Bezugszeichenliste

- 10: Ventil
- 12: Ventilantrieb
- 14: Getriebeeinrichtung
- 16: Ventilmembran
- 18: Antriebsgehäuse
- 20: Ventilgehäuse
- 22: Stellachse
- 24: Motor
- 26: Antriebselement
- 28: Abtriebselement
- 30: Antriebsgewinde
- 32: Abtriebsgewinde
- 34: Überwachungseinrichtung
- 36: Sensoreinrichtung
- 38: Drehwinkelsensor
- 40: erstes Sensorsignal
- 42: Linearpositionssensor
- 44: zweites Sensorsignal
- 46: Übertragungseinrichtung
- 48: mechanischer Anschlag

## Patentansprüche

1. Ventilantrieb (12) für ein Ventil (10), umfassend:
- eine Getriebeeinrichtung (14) mit einem Antriebselement (26) und mit einem Abtriebselement (28), wobei das Antriebselement (26) ein Antriebsgewinde (30) und das Abtriebselement (28) ein Abtriebsgewinde (32) aufweist, und
- eine Überwachungseinrichtung (34) zur Überwachung eines Verschleißes der Getriebeeinrichtung (14),
wobei die Überwachungseinrichtung (34) derart eingerichtet ist, dass der Verschleiß der Getriebeeinrichtung (14) in Abhängigkeit eines den Drehwinkel der Getriebeeinrichtung (14) charakterisierenden ersten Sensorsignals (40) und eines die Linearposition der Getriebeeinrichtung (14) charakterisierenden zweiten Sensorsignals (44) ermittelt wird, dass vor einem Übergang in einen Normalbetrieb ein Initialwert eines Initialspiels in einem Neuzustand der Getriebeeinrichtung (14) ermittelt und als Referenz gespeichert wird, und dass ein Verschleiß der Getriebeeinrichtung (14) durch einen Vergleich mit der Referenz ermittelt wird.

2. Ventilantrieb (12) nach Anspruch 1, wobei die Überwachungseinrichtung (34) derart eingerichtet ist, dass der Verschleiß der Getriebeeinrichtung (14), insbesondere zwischen dem Antriebselement (26) und Abtriebselement (28), in Abhängigkeit des den Drehwinkel des Antriebselements (26) charakterisierenden ersten Sensorsignals (40) und des die Linearposition des Abtriebselements (28) charakterisierenden zweiten Sensorsignals (44) ermittelt wird.

3. Ventilantrieb (12) nach Anspruch 1 oder 2, wobei die Überwachungseinrichtung (34) derart eingerichtet ist, dass der Verschleiß der Getriebeeinrichtung (14), insbesondere zwischen dem Antriebselement (26) und Abtriebselement (28), in Abhängigkeit einer Zeitreihe des Drehwinkels des Antriebselements (26) und einer Zeitreihe der Linearposition des Abtriebselements (28) und/oder einer Zeitreihe der auf das Antriebselement (26) und/oder Abtriebselement (28) wirkenden Kraft ermittelt wird.

4. Ventilantrieb (12) nach Anspruch 1, 2 oder 3, wobei die Überwachungseinrichtung derart eingerichtet ist, dass der Verschleiß der Getriebeeinrichtung (14) in Abhängigkeit eines Drehwinkels des Antriebselements (26) ermittelt wird, welcher das Antriebselement (26) zwischen einem ersten Zeitpunkt und einem zweiten Zeitpunkt zurücklegt, wobei im ersten Zeitpunkt das Abtriebselement (28) an einem mechanischen Anschlag (48) zur Anlage kommt und im zweiten Zeitpunkt das Abtriebselement (28) eine Linearbewegung beginnt.

5. Ventilantrieb (12) nach einem der vorherigen Ansprüche, wobei der Verschleiß des Antriebselements (26) und/oder des Abtriebselements (28) in Abhängigkeit eines Vergleichs zwischen einem ermittelten Antriebsspiel und einem Grenzantriebsspiel ermittelt wird.

6. Ventilantrieb (12) nach einem der vorherigen Ansprüche, umfassend:
- einen Drehwinkelsensor (38) zum Erzeugen des den Drehwinkel des Antriebselements (26) und/oder Abtriebselements (28) charakterisierenden ersten Sensorsignals (40), und
- einen Linearpositionssensor (42) und/oder ein Kraftsensor zum Erzeugen des die Linearposition des Antriebselements (26) und/oder Abtriebselements (28) charakterisierenden zweiten Sensorsignals (44).

7. Ventilantrieb (12) nach einem der vorherigen Ansprüche, wobei die Überwachungseinrichtung (34) eine, insbesondere akustische, optische und/oder haptische, Alarmvorrichtung zum Ausgeben eines Alarms bei Überschreiten eines Grenzverschleißes durch den ermittelten Verschleiß und/oder eine Übertragungseinrichtung zum Übertragen von Informationen zum ermittelten Verschleiß an eine übergeordnete Anlagensteuerung, insbesondere kabelgebunden vorzugsweise mittels Feldbus, aufweist.

8. Ventilantrieb (12) nach einem der vorherigen Ansprüche, wobei das Antriebselement (26) als Spindel bzw. Spindelmutter und/oder das Abtriebselement (28) als Spindelmutter bzw. Spindel ausgebildet ist, und insbesondere wobei das Antriebselement (26) mit einem Antrieb, insbesondere einem elektrischen Motor (24), und/oder das Abtriebselement (28) mit einem linear beweglichen Absperrmittel, insbesondere Ventilmembran (16), verbunden ist.

9. Ventil (10) mit einem Ventilantrieb (12) nach einem der vorherigen Ansprüche.

10. Verfahren zur Verschleißüberwachung eines Ventilantriebs (12), die Schritte umfassend:
- Ermitteln eines Initialwerts eines Initialspiels in einem Neuzustand einer Getriebeeinrichtung (14) und Speichern als Referenz vor einem Normalbetrieb,
- Erfassen eines den Drehwinkel der Getriebeeinrichtung (14) charakterisierenden ersten Sensorsignals (40) und eines die Linearposition der Getriebeeinrichtung (14) charakterisierenden zweiten Sensorsignals (44) im Normalbetrieb,
- Ermitteln eines Verschleißes einer Getriebeeinrichtung (14) des Ventilantriebs (12) in Abhängigkeit des ersten Sensorsignals (40) und des zweiten Sensorsignals (44) durch einen Vergleich mit der Referenz.

11. Verfahren nach Anspruch 10, wobei der Verschleiß der Getriebeeinrichtung (14) in Abhängigkeit eines Antriebsspiels der Getriebeeinrichtung (14) ermittelt wird.

12. Verfahren nach Anspruch 10 oder 11, wobei das Verfahren ferner die folgenden Schritte umfasst:
- Bewegen des Abtriebselements (28) gegen einen mechanischen Anschlag (48),
- Rotation des Antriebselements (26) zum Antreiben des Abtriebselements (28),
- Ermitteln des Drehwinkels des Antriebselements (26) zwischen einem Beginn einer Rotationsbewegung des Antriebselements (26) und einem Beginn einer Linearbewegung des Abtriebselements (28).

13. Verfahren nach Anspruch 12, wobei der mechanische Anschlag (48) an einer dem Absperrmittel abgewandten Seite des Ventilantriebs (12) angeordnet ist, und wobei ein Mediumsdruck in einer mittels des Absperrmittels verschließbaren Durchgangsleitung das Abtriebselement (28) bei Beginn der Rotationsbewegung des Antriebselements (26) gegen den mechanischen Anschlag (48) beaufschlagt.

14. Verfahren nach einem der Ansprüche 10 bis 13, wobei das erste Sensorsignal (40) einen Drehwinkel eines Antriebselements (26) der Getriebeeinrichtung (14) und das zweite Sensorsignal (44) eine Linearposition des Abtriebselements (28) der Getriebeeinrichtung (14) und/oder eine auf das Antriebselement (26) und/oder Abtriebselement (28) wirkende Kraft umfasst.

15. Verfahren nach einem der Ansprüche 10 bis 14, die Schritte umfassend:
- Erfassen einer Zeitreihe des ersten Sensorsignals (40) und des zweiten Sensorsignals (44);
- Ermitteln eines Antriebsspiels zwischen dem Antriebselement (26) und Abtriebselement (28) in Abhängigkeit der Zeitreihe des ersten Sensorsignals (40) und der Zeitreihe des zweiten Sensorsignals (44);
- Vergleichen des ermittelten Antriebsspiels und einem Grenzantriebsspiel;
- Ermitteln des Verschleißes des Antriebselements (26) und/oder Abtriebselements (28) in Abhängigkeit des Vergleichs zwischen dem Antriebsspiel und dem Grenzantriebsspiel.
